# EUROPÄISCHE PATENTSCHRIFT

(11) **EP 3 632 146 B1**
(45) Veröffentlichungstag und Bekanntmachung des Hinweises auf die Patenterteilung: **28.06.2023**
(21) Anmeldenummer: 18723517.1
(22) Anmeldetag: 09.05.2018
(51) Int. Cl.: H04W 12/06, G06F 21/33, H04W 12/08, H04L 9/40

(54) **VERFAHREN, SYSTEM, COMPUTERPROGRAMM UND COMPUTERPROGRAMMPRODUKT ZUM DURCHFÜHREN EINES FAHRZEUGGEBUNDENEN DIENSTES**
METHOD, SYSTEM, COMPUTER PROGRAM AND COMPUTER PROGRAM PRODUCT FOR PERFORMING A VEHICLE-BASED SERVICE
PROCÉDÉ, SYSTÈME, PROGRAMME INFORMATIQUE ET PRODUIT-PROGRAMME INFORMATIQUE POUR EXÉCUTER UN SERVICE LIÉ À UN VÉHICULE

(30) Priorität: 31.05.2017 DE 102017209197
(43) Veröffentlichungstag der Anmeldung: 08.04.2020
(73) Patentinhaber: Bayerische Motoren Werke Aktiengesellschaft, 80809 München (DE)
(72) Erfinder: REITBERGER, Michael, 82061 Neuried (DE)
(86) Internationale Anmeldenummer: PCT/EP2018/062048
(87) Internationale Veröffentlichungsnummer: WO 2018/219617

(56) Entgegenhaltungen:
- DE-A1-102015 003 768
- US-A1- 2003 096 641
- US-A1- 2016 353 497
- KOHL DIGITAL EQUIPMENT CORPORATION C NEUMAN ISI J: "The Kerberos Network Authentication Service (V5); rfc1510.txt", THE KERBEROS NETWORK AUTHENTICATION SERVICE (V5)?; RFC1510.TXT, INTERNET ENGINEERING TASK FORCE, IETF; STANDARD, INTERNET SOCIETY (ISOC) 4, RUE DES FALAISES CH- 1205 GENEVA, SWITZERLAND, 1. September 1993 (1993-09-01), XP015007297,
- Rune Magnussen ET AL: "Security in NFC with Wi-Fi Protected Setup as a use", , 30. September 2008 (2008-09-30), XP055485395, Grimstad, Norway Gefunden im Internet: URL:https://brage.bibsys.no/xmlui/bitstrea m/handle/11250/137105/Magnussen_Oppheim.pd f?sequence=1 [gefunden am 2018-06-18]

## Beschreibung

Die Erfindung betrifft ein Verfahren zum Durchführen eines fahrzeuggebundenen Dienstes mittels einer mobilen Einheit. Die Erfindung betrifft des Weiteren ein System zum Durchführen eines fahrzeuggebundenen Dienstes mittels der mobilen Einheit. Die Erfindung betrifft des Weiteren ein Computerprogramm und ein Computerprogrammprodukt zum Durchführen eines fahrzeuggebundenen Dienstes mittels der mobilen Einheit.

In modernen Fahrzeugen werden häufig Dienste fahrzeuggebunden angeboten. Derartige Dienste sind beispielsweise Telematik und Informationsdienste, wie ein Auskunftsdienst, beispielsweise ein Concierge-Call, eine Echtzeitverkehrsinformation, Musikstreamingdienste und Ähnliche. Diese Dienste werden beispielsweise vom jeweiligen Fahrzeughersteller angeboten. Die Aktivierung der Dienste erfolgt entweder über Zukauf einer Sonderausstattung oder über nachträgliche Aktivierung über ein Kundenportal. Voraussetzung für die Nutzung der digitalen Dienste ist beispielsweise die Integration eines Telematik-Steuergerätes mit Mobilfunkanbindung.

US 2003/0096641 A1 betrifft ein System und Verfahren, welches ermöglichen soll, Benutzerkonto, Tarif und Telefonnummer eines persönlichen Mobiltelefons mittels eines im Fahrzeug verbauten Telefons zu nutzen.

Die Aufgabe, die der Erfindung zugrunde liegt, ist, die Bedienung von fahrzeuggebunden Diensten zu vereinfachen.

Die Aufgabe wird gelöst durch die Merkmale der unabhängigen Patentansprüche. Vorteilhafte Ausgestaltungen sind in den Unteransprüchen gekennzeichnet.

Die Erfindung zeichnet sich aus durch ein Verfahren zum Durchführen eines fahrzeuggebundenen Dienstes mittels einer mobilen Einheit. Bei dem Verfahren werden mittels der mobilen Einheit erste Anfragedaten an eine Fahrzeugeinheit gesendet. Mittels der Fahrzeugeinheit werden abhängig von den ersten Anfragedaten zweite Anfragedaten an eine Diensteinheit gesendet. Mittels der Diensteinheit werden abhängig von den zweiten Anfragedaten Autorisierungsdaten an die Fahrzeugeinheit gesendet. Mittels der Fahrzeugeinheit werden abhängig von den Autorisierungsdaten die Autorisierungsdaten an die mobile Einheit gesendet. Mittels der mobilen Einheit wird abhängig von den Autorisierungsdaten mit der Diensteinheit kommuniziert zum Durchführen des Dienstes, wobei die mobile Einheit mittels einer ersten Kommunikationsschnittstelle der mobilen Einheit mit der Fahrzeugeinheit kommuniziert und mittels einer zweiten Kommunikationsschnittstelle der mobilen Einheit mit der Diensteinheit kommuniziert. Die erste Kommunikationsschnittstelle der mobilen Einheit ist eine Bluetoothschnittstelle. Die Fahrzeugeinheit ist fest in einem Motorrad verbaut.

Gerade in Motorrädern ist die Nutzung eines Dienstes mittels der Fahrzeugeinheit nicht sehr einfach. Somit ist es gerade bei einem Motorrad vorteilhaft die mobile Einheit zur Durchführung eines Dienstes zu nutzen.

Die Erfindung zeichnet sich des Weiteren aus durch ein System zum Durchführen des fahrzeuggebundenen Dienstes mittels der mobilen Einheit, aufweisend die mobile Einheit, die Fahrzeugeinheit und die Diensteinheit, wobei die Fahrzeugeinheit fest in einem Motorrad verbaut ist, und das System dazu ausgebildet ist, das Verfahren zum Durchführen eines fahrzeuggebundenen Dienstes durchzuführen.

Mittels des Verfahrens kann der jeweilige Dienst mit der mobilen Einheit ausgeführt werden. Da die Autorisierung jedoch über die Fahrzeugeinheit erfolgt, kann sichergestellt werden, dass der Dienst nur in oder in der Umgebung des Fahrzeuges ausgeführt wird und nicht ohne das Fahrzeug. Somit kann der Dienst mobil und somit einfacher und benutzerfreundlicher genutzt werden.

Die mobile Einheit kann beispielsweise in einem Smartphone, einem Tablet-PC und/oder einem Laptop ausgebildet sein.

Die zweiten Anfragedaten können beispielsweise identisch mit den ersten Anfragedaten sein. Alternativ, können die ersten Anfragedaten auch in der Fahrzeugeinheit verarbeitet werden und nichtidentische zweite Anfragedaten gesendet werden.

Die ersten Anfragedaten umfassen beispielsweise eine Information zu der mobilen Einheit und/oder eine Information zu einem gewählten Dienst. Die zweiten Anfragedaten umfassen beispielsweise eine Autorisierungsanfrage für die mobile Einheit für den gewählten Dienst.

Gemäß einer optionalen Ausgestaltung weisen die Autorisierungsdaten einen Authentifizierungsschlüssel und einen Zeitstempel auf.

Mittels des Authentifizierungsschlüssels und des Zeitstempels kann sichergestellt werden, dass der Dienst eine vorgegebene Zeit genutzt werden kann, beispielsweise einen einstelligen Minutenbereich. Danach kann beispielsweise ein neuer Autorisierungs-Key angefordert werden. Hierdurch kann ermöglicht werden, dass der Dienst auch für eine gewisse Zeit nach Verlassen des Fahrzeugs genutzt werden kann. Dies ist insbesondere bei einem Dienst zur Heimbegleitung durch gefährliche Gebiete oder bei einem Dienst zur Suche nach einem so genannten POI, also einem "Point of Interest" oder "Ort von Interesse" vorteilhaft.

Gemäß einer weiteren optionalen Ausgestaltung wird mittels der mobile Einheit abhängig von den Autorisierungsdaten und abhängig von einer Kommunikationsverbindung mit der Fahrzeugeinheit mit der Diensteinheit kommuniziert zum Durchführen des Dienstes.

Hierdurch kann erreicht werden, dass der Dienst beispielsweise nur bei einer bestehenden Kommunikationsverbindung zwischen mobilen Einheit und Fahrzeugeinheit durchgeführt wird. Somit kann hiermit erreicht werden, dass der Dienst nur in direkter Nähe zu dem Fahrzeug genutzt werden kann. Alternativ oder zusätzlich kann auch eine zeitlich begrenzte Weiternutzung des Dienstes nach Abbruch der Kommunikationsverbindung erlaubt werden.

Gemäß einer weiteren optionalen Ausgestaltung kommuniziert die mobile Einheit mittels einer ersten Kommunikationsschnittstelle der mobilen Einheit mit der Fahrzeugeinheit und mittels einer zweiten Kommunikationsschnittstelle der mobilen Einheit mit der Diensteinheit.

Durch die zwei Kommunikationsschnittstellen kann die mobile Einheit gleichzeitig mit der Fahrzeugeinheit und der Diensteinheit kommunizieren, so dass die Bereitstellung des Dienstes schneller erfolgen kann.

Gemäß einer weiteren optionalen Ausgestaltung ist die zweite Kommunikationsschnittstelle der mobilen Einheit eine Mobilfunkschnittstelle.

Gemäß einer weiteren optionalen Ausgestaltung kommuniziert die Fahrzeugeinheit mittels einer ersten Kommunikationsschnittstelle der Fahrzeugeinheit mit der mobilen Einheit und mittels einer zweiten Kommunikationsschnittstelle der Fahrzeugeinheit mit der Diensteinheit.

Durch die zwei Kommunikationsschnittstellen kann die Fahrzeugeinheit gleichzeitig mit der mobilen Einheit und der Diensteinheit kommunizieren, so dass die Bereitstellung des Dienstes schneller erfolgen kann.

Gemäß einer weiteren optionalen Ausgestaltung ist die erste Kommunikationsschnittstelle der Fahrzeugeinheit eine Bluetoothschnittstelle.

Gemäß einer weiteren optionalen Ausgestaltung ist die zweite Kommunikationsschnittstelle der Fahrzeugeinheit eine Mobilfunkschnittstelle ist.

Gemäß eines weiteren Aspekts zeichnet sich die Erfindung aus durch ein Computerprogramm, wobei das Computerprogramm ausgebildet ist, das Verfahren zum Durchführen eines fahrzeuggebundenen Dienstes durchzuführen.

Gemäß eines weiteren Aspekts zeichnet sich die Erfindung aus durch ein Computerprogrammprodukt, das einen ausführbaren Programmcode umfasst, wobei der Programmcode bei Ausführung durch eine Datenverarbeitungsvorrichtung das Verfahren zum Durchführen eines fahrzeuggebundenen Dienstes ausführt.

Das Computerprogrammprodukt umfasst insbesondere ein von der Datenverarbeitungsvorrichtung lesbares Medium, auf dem der Programmcode gespeichert ist.

Ausführungsbeispiele der Erfindung sind im Folgenden anhand der schematischen Zeichnungen näher erläutert. Es zeigen:
- Figur 1: Ein System zum Durchführen eines fahrzeuggebundenen Dienstes und
- Figur 2: ein Ablaufdiagram zum Durchführen eines fahrzeuggebundenen Dienstes.

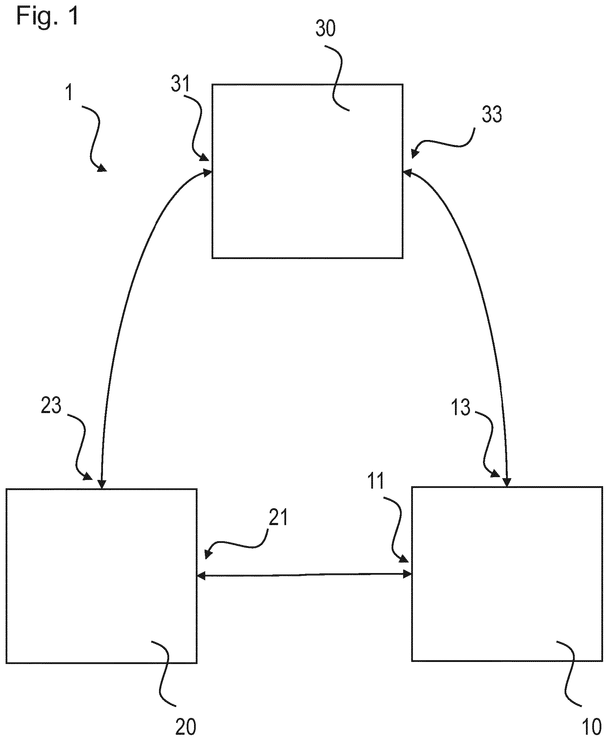

Die Figur 1 zeigt ein System zum Durchführen eines fahrzeuggebundenen Dienstes.

Das System 1 umfasst eine mobile Einheit 10. Die mobile Einheit 10 umfasst eine Recheneinheit, einen Programm- und Datenspeicher, sowie eine erste Kommunikationsschnittstelle 11 und eine zweite Kommunikationsschnittstelle 13. Der Programm- und Datenspeicher und/oder die Recheneinheit und/oder die Kommunikationsschnittstellen 11, 13 können in einer Baueinheit und/oder verteilt auf mehrere Baueinheiten ausgebildet sein.

Die mobile Einheit 10 kann beispielsweise in einem Smartphone, einem Tablet-PC und/oder einem Laptop ausgebildet sein.

Das System 1 umfasst des Weiteren eine Fahrzeugeinheit 20. Die Fahrzeugeinheit 20 umfasst eine Recheneinheit, einen Programm- und Datenspeicher, sowie eine erste Kommunikationsschnittstelle 21 und eine zweite Kommunikationsschnittstelle 23. Der Programm- und Datenspeicher und/oder die Recheneinheit und/oder die Kommunikationsschnittstellen 21, 23 können in einer Baueinheit und/oder verteilt auf mehrere Baueinheiten ausgebildet sein.

Die Fahrzeugeinheit 20 ist fest in einem Fahrzeug, nämlich einem Motorrad, angeordnet. Das System 1 umfasst des Weiteren eine Diensteinheit 30. Die Diensteinheit 30 umfasst eine Recheneinheit, einen Programm- und Datenspeicher, sowie eine erste Kommunikationsschnittstelle 31 und eine zweite Kommunikationsschnittstelle 33. Der Programm- und Datenspeicher und/oder die Recheneinheit und/oder die Kommunikationsschnittstellen 31, 33 können in einer Baueinheit und/oder verteilt auf mehrere Baueinheiten ausgebildet sein. Die beiden Kommunikationsschnittstellen 31, 33 können auch in einer Kommunikationsschnittstelle ausgebildet sein.

Die Diensteinheit 30 ist außerhalb des Fahrzeuges, beispielsweise in einem Backend, ausgebildet.

Die mobile Einheit 10 und die Fahrzeugeinheit 20 können mittels ihrer ersten Kommunikationsschnittstellen 11, 21 miteinander kommunizieren. Die erste Kommunikationsschnittstelle 11 der mobilen Einheit 10 und die erste Kommunikationsschnittstelle 21 der Fahrzeugeinheit 20 sind Bluetoothschnittstellen.

Die mobile Einheit 10 und die Fahrzeugeinheit 20 können mittels ihrer zweiten Kommunikationsschnittstellen 13, 23 mit der Diensteinheit 30 kommunizieren. Die zweite Kommunikationsschnittstelle 13 der mobilen Einheit 10 und die zweite Kommunikationsschnittstelle 23 der Fahrzeugeinheit 20 sind beispielsweise Mobilfunkschnittstellen.

Mittels des Systems 1 kann ein fahrzeuggebundener Dienst ausgeführt werden. Auf dem Programm- und Datenspeichern der mobilen Einheit 10, der Fahrzeugeinheit 20 und der Diensteinheit 30 ist hierfür insbesondere ein Programm gespeichert.

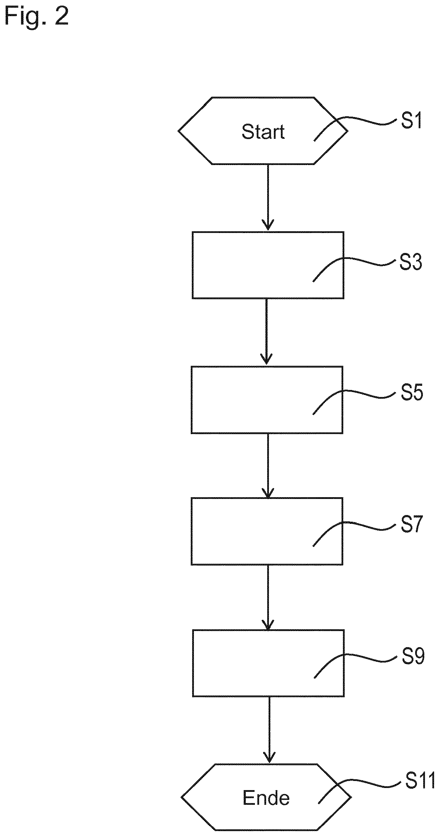

Figur 2 zeigt ein Ablaufdiagramm des Programms zum Durchführen eines fahrzeuggebundenen Dienstes.

Das Programm wird in einem Schritt S1 gestartet, in dem gegebenenfalls Variablen initialisiert werden können. Das Programm kann beispielsweise mittels einer App auf der mobilen Einheit 10 gestartet werden.

In einem Schritt S3 werden erste Anfragedaten von der mobilen Einheit 10 an die Fahrzeugeinheit 20 gesendet. Die ersten Anfragedaten umfassen beispielsweise eine Information zu der mobilen Einheit 10 und/oder eine Information zu einem gewählten Dienst.

In einem Schritt S5 werden zweite Anfragedaten von der Fahrzeugeinheit 20 an die Diensteinheit 30 abhängig von den ersten Anfragedaten gesendet. Die zweiten Anfragedaten umfassen beispielsweise eine Autorisierungsanfrage für die mobile Einheit 10 für den gewählten Dienst.

In einem Schritt S7 sendet die Diensteinheit 30 abhängig von den zweiten Anfragedaten Autorisierungsdaten an die Fahrzeugeinheit 20. Ist der gewählte Dienst aktiviert und/oder verfügbar, so umfassen die Autorisierungsdaten beispielsweise einen Authentifizierungsschlüssel und einen Zeitstempel. Ist der gewählte Dienst nicht verfügbar, so umfassen die Autorisierungsdaten beispielsweise eine Absage und/oder einen Default-Schlüssel mittels dem der Dienst nicht genutzt werden kann.

In einem Schritt S9 sendet die Fahrzeugeinheit 20 abhängig von den Autorisierungsdaten die Autorisierungsdaten an die mobile Einheit 10.

Umfassen die Autorisierungsdaten den Authentifizierungsschlüssel und den Zeitstempel, so kann nun beispielsweise die mobile Einheit 10 mit der Diensteinheit 30 kommunizieren und den Dienst durchführen.

Mittels des Authentifizierungsschlüssels und des Zeitstempels kann sichergestellt werden, dass der Dienst eine vorgegebene Zeit genutzt werden kann, beispielsweise einen einstelligen Minutenbereich. Danach kann beispielsweise ein neuer Autorisierungs-Key angefordert werden. Hierdurch kann ermöglicht werden, dass der Dienst auch für eine gewisse Zeit nach Verlassen des Fahrzeugs genutzt werden kann. Alternativ oder zusätzlich kann der Dienst beispielsweise auch nur bei einer bestehenden Kommunikationsverbindung zwischen der mobilen Einheit 10 und der Fahrzeugeinheit 20 durchgeführt werden. Somit kann hiermit erreicht werden, dass der Dienst nur in direkter Nähe zu dem Fahrzeug genutzt werden kann. Alternativ oder zusätzlich kann auch eine zeitlich begrenzte Weiternutzung des Dienstes nach Abbruch der Kommunikationsverbindung erlaubt werden.

In einem Schritt S11 wird das Programm beendet und kann gegebenenfalls wieder in dem Schritt S1 gestartet werden.

Mittels des Verfahrens kann der jeweilige gewählte Dienst mit der mobilen Einheit 10 ausgeführt werden. Da die Autorisierung jedoch über die Fahrzeugeinheit 20 erfolgt, kann sichergestellt werden, dass der Dienst nur in oder in der Umgebung des Fahrzeuges ausgeführt wird und nicht ohne das Fahrzeug. Somit kann der Dienst mobil und somit einfacher und benutzerfreundlicher genutzt werden.

Derartige Dienste sind beispielsweise Telematik und Informationsdienste, wie einen Auskunftsdienst, beispielsweise ein Concierge-Call, eine Echtzeitverkehrsinformation, Musikstreamingdienste, ein Dienst zur Suche nach einem so genannten POI, also einem "Point of Interest" oder "Ort von Interesse", ein Dienst zur Heimbegleitung durch gefährliche Gebiete und oder ein Notrufdienst.

Im Folgenden werden beispielhafte Dienste noch einmal näher erläutert:
Um einen "Informationsdienst Sprachanruf" zu nutzen, Startet ein Nutzer den Dienst über eine App. Wurde der Dienst gestartet und mit einem gültigen Authentifizierungsschlüssel bestätigt, dann kann der Dienst für eine zu definierende Zeit genutzt werden. Danach muss ein neuer Authentifizierungsschlüssel angefordert werden. Ein Sprachanrufdienst ist für Motorräder oft problematisch. Für Motorradfahrer besteht durch das Verfahren die Möglichkeit der Nutzung der mobilen Einheit 10 zur Sprachkommunikation, welche praktischer und einfacher ist, als eine fest im Motorrad verbaute Kommunikationseinheit.

Möglich ist auch eine zeitlich begrenzte Weiternutzung des Dienstes nach Abbruch der Kommunikationsverbindung zur Fahrzeugeinheit 20. Dadurch kann der Nutzer in gewissen Fällen auch nach Verlassen des Fahrzeuges weiter unterstützt werden, z.B. beim der Suche nach einem POI oder zur Heimbegleitung durch persönlich gefährliche Gebiete.

Weiterhin können über den Sprachanruf angeforderte POIs auf die mobile Einheit 10 übertragen werden. Diese können z.B. für Navigation auch außerhalb des Fahrzeuges genutzt werden.

Weiterhin kann über den Sprachanruf ein qualitativ hochwertiger Notruf abgesetzt werden. Eine Freisprechfunktion wie bei PKWs ist für Motorräder oft problematisch. Für Motorradfahrer besteht dadurch die Möglichkeit der Nutzung Notrufs mit ordentlicher Sprachkommunikation über die mobile Einheit 10.

**Bezugszeichenliste**

| | |
|---|---|
| System | 1 |
| Mobile Einheit | 10 |
| Kommunikationsschnittstelle | 11 |
| Kommunikationsschnittstelle | 13 |
| Fahrzeugeinheit | 20 |
| Kommunikationsschnittstelle | 21 |
| Kommunikationsschnittstelle | 23 |
| Diensteinheit | 30 |
| Kommunikationsschnittstelle | 31 |
| Kommunikationsschnittstelle | 33 |
| Schritte | S1-S11 |

## Patentansprüche

1. Verfahren zum Durchführen eines fahrzeuggebundenen Dienstes mittels einer mobilen Einheit (10), bei dem
- mittels der mobilen Einheit (10) erste Anfragedaten an eine Fahrzeugeinheit (20) gesendet werden,
- mittels der Fahrzeugeinheit (20) abhängig von den ersten Anfragedaten zweite Anfragedaten an eine Diensteinheit (30) gesendet werden,
- mittels der Diensteinheit (30) abhängig von den zweiten Anfragedaten Autorisierungsdaten an die Fahrzeugeinheit (20) gesendet werden,
- mittels der Fahrzeugeinheit (20) abhängig von den Autorisierungsdaten die Autorisierungsdaten an die mobile Einheit (10) gesendet werden,
- mittels der mobilen Einheit (10) abhängig von den Autorisierungsdaten mit der Diensteinheit (30) kommuniziert wird zum Durchführen des Dienstes, wobei die mobile Einheit (10) mittels einer ersten Kommunikationsschnittstelle (11) der mobilen Einheit (10) mit der Fahrzeugeinheit (20) kommuniziert und mittels einer zweiten Kommunikationsschnittstelle (13) der mobilen Einheit (10) mit der Diensteinheit (30) kommuniziert,
wobei die erste Kommunikationsschnittstelle (11) der mobilen Einheit (10) eine Bluetoothschnittstelle ist, wobei die Fahrzeugeinheit (20) fest in einem Motorrad verbaut ist.

2. Verfahren nach Anspruch 1, bei dem die Autorisierungsdaten einen Authentifizierungsschlüssel und einen Zeitstempel aufweisen.

3. Verfahren nach einem der vorhergehenden Ansprüche, bei dem die mobile Einheit (10) abhängig von den Autorisierungsdaten und abhängig von einer Kommunikationsverbindung mit der Fahrzeugeinheit (20) mit der Diensteinheit (30) kommuniziert zum Durchführen des Dienstes.

4. Verfahren nach einem der vorhergehenden Ansprüche, wobei die zweite Kommunikationsschnittstelle (13) der mobilen Einheit (10) eine Mobilfunkschnittstelle ist.

5. Verfahren nach einem der vorhergehenden Ansprüche, wobei die Fahrzeugeinheit (20) mittels einer ersten Kommunikationsschnittstelle (21) der Fahrzeugeinheit (20) mit der mobilen Einheit (10) kommuniziert und mittels einer zweiten Kommunikationsschnittstelle (23) der Fahrzeugeinheit (20) mit der Diensteinheit (30) kommuniziert.

6. Verfahren nach einem der vorhergehenden Ansprüche, wobei die erste Kommunikationsschnittstelle (21) der Fahrzeugeinheit (20) eine Bluetoothschnittstelle ist.

7. Verfahren nach einem der vorhergehenden Ansprüche, wobei die zweite Kommunikationsschnittstelle (23) der Fahrzeugeinheit (20) eine Mobilfunkschnittstelle ist.

8. System (1) zum Durchführen eines fahrzeuggebundenen Dienstes mittels einer mobilen Einheit (10), aufweisend die mobile Einheit (10), eine Fahrzeugeinheit (20) und eine Diensteinheit (30), wobei die mobile Einheit (10) mittels einer ersten Kommunikationsschnittstelle (11) der mobilen Einheit (10) mit der Fahrzeugeinheit (20) kommuniziert und mittels einer zweiten Kommunikationsschnittstelle (13) der mobilen Einheit (10) mit der Diensteinheit (30) kommuniziert,
wobei die erste Kommunikationsschnittstelle (11) der mobilen Einheit (10) eine Bluetoothschnittstelle ist und die Fahrzeugeinheit (20) fest in einem Motorrad verbaut ist, und das System (1) dazu ausgebildet ist, das Verfahren nach einem der Ansprüche 1 bis 7 durchzuführen.

9. Computerprogramm zum Durchführen eines fahrzeuggebundenen Dienstes, wobei das Computerprogramm ausgebildet ist das Verfahren nach einem der Ansprüche 1 bis 7 bei seiner Ausführung auf einer Datenverarbeitungsvorrichtung durchzuführen.

10. Computerprogrammprodukt umfassend ausführbaren Programmcode, wobei der Programmcode bei Ausführung durch eine Datenverarbeitungsvorrichtung das Verfahren nach einem der Ansprüche 1 bis 7 ausführt.

## Claims

1. Method for performing an onboard service by means of a mobile unit (10), in which
- the mobile unit (10) is used to send first request data to a vehicle unit (20),
- the vehicle unit (20) is used to take the first request data as a basis for sending second request data to a service unit (30),
- the service unit (30) is used to take the second request data as a basis for sending authorization data to the vehicle unit (20),
- the vehicle unit (20) is used to take the authorization data as a basis for sending the authorization data to the mobile unit (10),
- the mobile unit (10) is used to take the authorization data as a basis for communicating with the service unit (30) to perform the service, the mobile unit (10) using a first communication interface (11) of the mobile unit (10) to communicate with the vehicle unit (20) and using a second communication interface (13) of the mobile unit (10) to communicate with the service unit (30),
wherein the first communication interface (11) of the mobile unit (10) is a Bluetooth interface, the vehicle unit (20) being permanently installed in a motorcycle.

2. Method according to Claim 1, in which the authorization data have an authentication key and a timestamp.

3. Method according to either of the preceding claims, in which the mobile unit (10) takes the authorization data and takes a communication connection to the vehicle unit (20) as a basis for communicating with the service unit (30) to perform the service.

4. Method according to one of the preceding claims, wherein the second communication interface (13) of the mobile unit (10) is a mobile radio interface.

5. Method according to one of the preceding claims, wherein the vehicle unit (20) uses a first communication interface (21) of the vehicle unit (20) to communicate with the mobile unit (10) and uses a second communication interface (23) of the vehicle unit (20) to communicate with the service unit (30).

6. Method according to one of the preceding claims, wherein the first communication interface (21) of the vehicle unit (20) is a Bluetooth interface.

7. Method according to one of the preceding claims, wherein the second communication interface (23) of the vehicle unit (20) is a mobile radio interface.

8. System (1) for performing an onboard service by means of a mobile unit (10), having the mobile unit (10), a vehicle unit (20) and a service unit (30), the mobile unit (10) using a first communication interface (11) of the mobile unit (10) to communicate with the vehicle unit (20) and using a second communication interface (13) of the mobile unit (10) to communicate with the service unit (30),
wherein the first communication interface (11) of the mobile unit (10) is a Bluetooth interface and the vehicle unit (20) is permanently installed in a motorcycle, and the system (1) is designed to perform the method according to one of Claims 1 to 7.

9. Computer program for performing an onboard service, wherein the computer program is designed to perform the method according to one of Claims 1 to 7 when it is executed on a data processing apparatus.

10. Computer program product comprising executable program code, wherein the program code carries out the method according to one of Claims 1 to 7 when executed by a data processing apparatus.

## Revendications

1. Procédé pour exécuter un service lié à un véhicule au moyen d'une unité mobile (10), avec lequel
- des premières données d'interrogation sont envoyées à une unité de véhicule (20) au moyen de l'unité mobile (10),
- des deuxièmes données d'interrogation sont envoyées à une unité de service (30) au moyen de l'unité de véhicule (20) en fonction des premières données d'interrogation,
- des données d'autorisation sont envoyées à l'unité de véhicule (20) au moyen de l'unité de service (30) en fonction des deuxièmes données d'interrogation,
- des données d'autorisation sont envoyées à l'unité mobiles (10) au moyen de l'unité de véhicule (20) en fonction des données d'autorisation,
- une communication est effectuée avec l'unité de service (30) au moyen de l'unité mobile (10) en fonction des deuxièmes données d'interrogation afin d'exécuter le service, l'unité mobile (10) communiquant avec l'unité de véhicule (20) au moyen d'une première interface de communication (11) de l'unité mobile (10) et communiquant avec l'unité de service (30) au moyen d'une deuxième interface de communication (13) de l'unité mobile (10), la première interface de communication (11) de l'unité mobile (10) étant une interface Bluetooth, l'unité de véhicule (20) étant installée à demeure dans une motocyclette.

2. Procédé selon la revendication 1, avec lequel les données d'autorisation possèdent une clé d'authentification et une estampille temporelle.

3. Procédé selon l'une des revendications précédentes, avec lequel l'unité mobile (10) communique avec l'unité de service (30) en fonction des données d'autorisation et en fonction d'une liaison de communication avec l'unité de véhicule (20) en vue d'exécuter le service.

4. Procédé selon l'une des revendications précédentes, la deuxième interface de communication (13) de l'unité mobile (10) étant une interface de radiocommunication mobile.

5. Procédé selon l'une des revendications précédentes, l'unité de véhicule (20) communiquant avec l'unité mobile (10) au moyen d'une première interface de communication (21) de l'unité de véhicule (20) et communiquant avec l'unité de service (30)au moyen d'une deuxième interface de communication (23) de l'unité de véhicule (20).

6. Procédé selon l'une des revendications précédentes, la première interface de communication (21) de l'unité de véhicule (20) étant une interface Bluetooth.

7. Procédé selon l'une des revendications précédentes, la deuxième interface de communication (23) de l'unité de véhicule (20) étant une interface de radiocommunication mobile.

8. Système (1) pour exécuter un service lié à un véhicule au moyen d'une unité mobile (10), comprenant l'unité mobile (10), une unité de véhicule (20) et une unité de service (30), l'unité mobile (10) communiquant avec l'unité de véhicule (20) au moyen d'une première interface de communication (11) de l'unité mobile (10) et communiquant avec l'unité de service (30) au moyen d'une deuxième interface de communication (13) de l'unité mobile (10),
la première interface de communication (11) de l'unité mobile (10) étant une interface Bluetooth et l'unité de véhicule (20) étant installée à demeure dans une motocyclette, et le système (1) étant configuré pour mettre en oeuvre le procédé selon l'une des revendications 1 à 7.

9. Programme informatique pour exécuter un service lié à un véhicule, le programme informatique étant configuré pour mettre en oeuvre le procédé selon l'une des revendications 1 à 7 lors de son exécution sur un dispositif de traitement de données.

10. Produit de programme informatique comprenant un code de programme exécutable, le code de programme, lors de son exécution par un dispositif de traitement de données, mettant en oeuvre le procédé selon l'une des revendications 1 à 7.
